Europäisches Patentamt

**European Patent Office**

**Office européen des brevets**

(19)

(11) Numéro de publication: **0 124 674
B1**

(12) **FASCICULE DE BREVET EUROPEEN**

(45) Date de publication du fascicule du brevet:
**05.08.87**

(21) Numéro de dépôt: **83430015.4**

(22) Date de dépôt: **27.04.83**

(51) Int. Cl.⁴: **H 04 J 3/06,** H 04 J 3/16,
H 04 L 7/02

(54) **Procédé de synchronisation de l'émetteur d'un système de transmission numérique et dispositif de mise en oeuvre dudit procédé.**

(43) Date de publication de la demande:
**14.11.84 Bulletin 84/46**

(45) Mention de la délivrance du brevet:
**05.08.87 Bulletin 87/32**

(84) Etats contractants désignés:
**DE FR GB IT**

(56) Documents cités:
**US - A - 3 665 405**
**US - A - 3 752 933**
**US - A - 4 280 099**
**US - A - 4 305 045**

(73) Titulaire: *International Business Machines Corporation,*
Old Orchard Road, Armonk, N.Y. 10504 (US)

(84) Etats contractants désignés: **DE GB IT**

(73) Titulaire: **Compagnie IBM FRANCE, 5 Place Vendôme,
F-75000 Paris 1er (FR)**

(84) Etats contractants désignés: **FR**

(72) Inventeur: **Pilost, Daniel, 229, CR4 de l'Adret, F-06610 La
Gaude (FR)**

(74) Mandataire: **Tubiana, Max, Compagnie IBM France
Département de Propriété Industrielle, F-06610 La
Gaude (FR)**

ACTORUM AG

## Description

Domaine technique

L'invention concerne les systèmes de transmission numérique et plus précisément les moyens de synchronisation des émetteurs de tels systèmes.

Etat de la technique

La construction et l'exploitation de lignes, ou plus généralement de voies de transmission de données, étant onéreuse, on a tout intérêt à utiliser ces lignes au mieux de leur possibilités. On a notamment intérêt à faire partager une même voie entre plusieurs utilisateurs à condition de ne gêner aucun desdits utilisateurs. Un certain nombre de techniques de transmissions numériques ont été développées à cet effet. Parmi ces techniques se trouvent les techniques de multiplexage dans le temps. Un multiplexeur concentre à l'émission les données numériques provenant de plusieurs utilisateurs (ou terminaux) sur une même voie ou support commun de débit. Pour ce faire, un dispositif d'aiguillage synchronisé par une horloge, consulte les différents terminaux à multiplexer et en prélève les données (bits).

On notera cependant que tous les terminaux rattachés à un même multiplexeur ne sont pas toujours conçus pour travailler, autrement dit fournir des bits à transmettre, à la même vitesse ou cadence. Chaque terminal comporte une horloge oscillant à sa fréquence propre et qui en principe règle la fréquence à laquelle le terminal fournit ses bits de données à transmettre.

Cette horloge de terminal serait donc externe au multiplexeur ou plus généralement au système de transmission auquel le multiplexeur appartient. Mais, en pratique, le signal horloge réglant la cadence de prélèvement des bits engendrés par le terminal peut aussi être engendré par une horloge interne au système de transmission et être fourni au terminal.

En outre, compte tenu des caractéristiques électriques des lignes, les données numériques doivent être soumises à une opération dite de modulation avant d'être transmises sur la ligne. On s'intéressera ici plus particulièrement aux techniques de modulation dites à double bandes latérales – porteuses en quadrature (DBS-QC). Les bits de données obtenus par multiplexage sont groupés par 4 ou 6 par exemple. La valeur correspondant à chaque groupe de bits définit un symbole d'une constellation, lequel symbole correspond à une amplitude à imposer à chacune des deux porteuses à un instant dit de signalisation. L'intervalle de temps séparant deux instants de signalisation consécutifs est dit «temps baud». L'onde transmise n'est donc porteuse d'information qu'à des instants précis et régulièrement espacés entre eux. Pour qu'à la réception le récepteur puisse retrouver chaque symbole et donc les bits correspondants, il est nécessaire qu'il puisse traiter le signal reçu à ces mêmes instants de signalisation.

Ce qui précède permet de comprendre l'utilité, aussi bien à l'émission qu'à la réception, de moyens dits d'horloge réglables de manière précise à la fois en fréquence et en phase.

Pour que l'ensemble d'émission comprenant notamment les éléments terminaux, multiplexeur et modulateur puisse fonctionner correctement, il est nécessaire que les horloges de ses éléments ne fonctionnent pas de manières totalement indépendantes les unes des autres. En pratique, on choisit l'horloge de l'un des terminaux (horloge externe) comme horloge de référence sur laquelle on règle l'horloge du modem (horloge interne). Cette horloge interne est du type dit à verrouillage de phase (PLO). On impose ensuite la phase de l'horloge interne ainsi réglée, aux différents terminaux. Cette opération est simple à réaliser lorsque les fréquences horloges sont entre elles dans un rapport binaire (ex: 9600, 4800 et 2400 c/s). Dans ce cas en effet, une fois les horloges mises en phases à un instant donné, l'accord de phase est en principe acquis pour les cycles suivants. Il n'en est pas de même lorsque les fréquences horloges ne sont pas entre elles dans un rapport binaire. Comme par exemple 14400, 12000, 9600, 7200, 4800 et 2400 c/s.

Le brevet USA 3665405 décrit un système de synchronisation permettant d'adapter les communications entre une pluralité de sources de données et un même canal de transmission, à l'aide d'un dispositif contenant une horloge à verrouillage de phase (PLO). Ce système s'applique notamment à un trafic dans lequel les rapports de vitesses entre terminaux et canal ne sont pas dans un rapport entier.

Ce système fait appel à des manipulations relativement complexes d'un signal de base. La présente invention propose un procédé plus simple, tenant compte du fait que la synchronisation des horloges mises en jeu n'est indispensable qu'aux temps bauds.

La présente invention a donc pour objet des moyens permettant de régler les horloges d'un système de transmission numérique desservant des terminaux travaillant individuellement à des cadences qui ne sont pas nécessairement entre elles dans un rapport binaire, et ce, en agissant à des temps bauds.

D'autres objets, caractéristiques et avantages de la présente invention ressortiront mieux de l'exposé qui suit, fait en référence aux dessins annexés à ce texte qui représentent un mode préféré de réalisation de ladite invention.

Brève description des figures

Figure 1: configuration d'un système de communication.

Figure 2: schéma de principe situant l'invention dans le système de communication.

Figure 3: schéma bloc d'un mode de réalisation de l'invention.

Figure 4: détails d'un mode de réalisation du circuit 58 de la figure 3.

Figure 5: diagramme temporel du fonctionnement de l'invention.

Description détaillée de l'invention

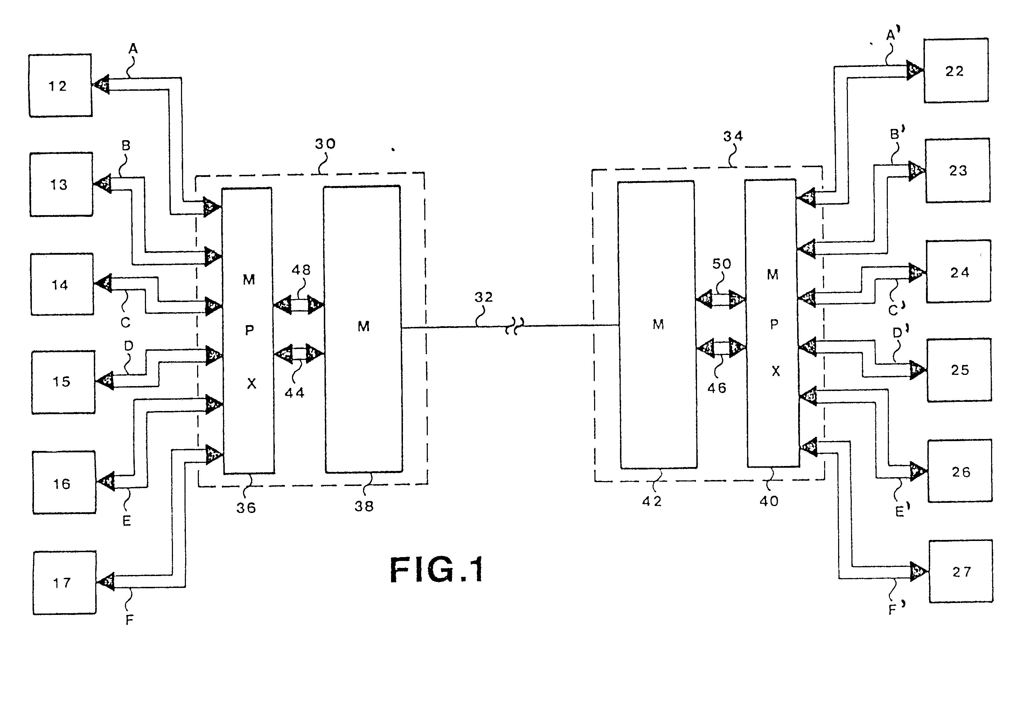

La figure 1 montre la configuration générale d'un système de communications numériques. Des équipements terminaux de traitements de données (DET) 12, 13, 14, 15, 16 et 17 dits à basses vitesses sont reliés à un modem multicanaux 30 au travers de canaux A, B, C, D, E, F. Les liaisons sur lesdits canaux se font selon les normes V 24 (dites aussi jonctions de type V 24) définies par le Comité Consultatif International pour le Télégraphe et le Téléphone (CCITT) ou les normes américaines équivalentes EIA 232 C. Le modem multi-canaux 30 est relié par une voie de communication haute vitesse 32 à un autre modem multi-canaux 34 de même type que 30. Le modem multicanaux 34 est relié aux terminaux de traitement de données 22, 23, 24, 25, 26 et 27 par des canaux A', B', C', D', E', F' semblables aux canaux A, B, C, D, E et F. Les jonctions entre modem 34 et terminaux 22 à 27 sont aussi du type V 24 du CCITT.

Chacun des modems multi-canaux 30 et 34 comporte essentiellement deux parties. L'une désignée par 36 ou 40 selon l'extrémité de la voie de communication 32 considérée, est constituée par un dispositif de multiplexage (ou carte multiplex). L'autre désignée par 38 ou 42 est constituée par un modem proprement dit. Les modems multi-canaux 30 et 34 peuvent être constitués par exemple, par des modems IBM 3865 travaillant selon les techniques de modulation dites à doubles bandes latérales porteuses en quadrature (DSB-QC) de façon à incorporer l'invention telle qu'elle sera décrite plus loin de manière détaillée. Chacun des dispositifs de multiplexage 36 ou 40, est relié au modem correspondant par une jonction de type V 24, désignée par 44 ou 46 et éventuellement par un bus 48 ou 50.

En fonctionnement, pour une transmission des terminaux 12 à 17 vers les terminaux 22 à 27, la carte multiplex 36 assemble tout d'abord les bits fournis par certains des terminaux 12 à 17 (ceux reliés à des canaux dits actifs) en groupes de N bits. Pour une transmission à un taux global de 14 400 pbs, on groupera par exemple les bits par six (N = 6), chaque groupe constituant un «sixbit». La composition de chaque sixbit dépend de la configuration des canaux actifs. Le tableau I ci-dessous représente la composition du sixbit pour certaines configurations possibles.

Tableau I

| Configu-ration | Canal actif | Débit canal actif (bps) ou DTE rattaché | Affectation sixbits | | | | | |
|---|---|---|---|---|---|---|---|---|
| | | | Q1 | Q2 | Q3 | Q4 | Q5 | Q6 |
| 1 | A | 14 400 | × | × | × | × | × | × |
| 2 | B | 12 000 | × | × | × | × | × | |
| | F | 2400 | | | | | | × |
| 3 | C | 9600 | × | × | | × | × | |
| | E | 4800 | | | × | | | × |
| 4 | D | 7200 | × | | × | | × | |
| | E | 4800 | | × | | × | | |
| | F | 2400 | | | | | | × |

Supposons qu'à un instant donné, le système fonctionne selon la configuration 2, autrement dit seuls les canaux B et F sont actifs. Le canal B opère à une cadence de 12 000 bps; le canal F à 2400 bps et la transmission se fait à une vitesse globale apparente de 14 400 bps. Cela signifie que durant un temps baud, le multiplexeur 36 devra receuillir cinq bits du terminal DTE 13 relié au canal B et un bit du terminal 17 relié au canal F. Ces six bits sont transmis toutes les 1/2400 secondes (temps baud) au modem 38 où ils servent à identifier un symbole, lequel symbole est transmis par modulation d'amplitude de deux porteuses en quadrature (modulation DSB-QC). Ceci revient à dire qu'un symbole représentant un «sixbit» est transmis sur la ligne 32 à intervalles réguliers aux instants dits de signalisation. Les instants de signalisation sont espacés entre eux de 1/2400 secondes. L'onde analogique transmise sur la voie 32 est donc porteuse d'information à ces instants de signalisation. A la réception, le modem 42 échantillonne l'onde reçu pour en extraire l'information qu'elle contient à chaque instant de signalisation et en déduire le symbole reçu. Cette extraction implique des opérations dites de traitement du signal reçu. Chaque symbole est ensuite converti en un sixbit dont les composants (bits) sont envoyés vers les terminaux destinataires. Autrement dit, pour l'exemple choisi, chaque sixbit est décomposé en cinq bits destinés au terminal 23 et un bit pour le terminal 27.

Ce qui précède fait ressortir l'utilité de synchroniser les opérations gérant la circulation des bits entre chaque terminal et le modulateur proprement dit (par exemple 38). On s'intéresse ici en effet uniquement aux opérations d'émission. Chaque terminal est équipé de sa propre horloge (horloge externe au modem), oscillant à la fréquence de fonctionnement correspondant, soit 14 400, 12 000, 9600, 7200, 4800 ou 2400 c/s. Quant au modem, il dispose d'une horloge interne fournissant un signal à 14 400 c/s et un signal à 2400 c/s. L'horloge interne du modem est équipée d'un oscillateur à verrouillage de phase (PLO).

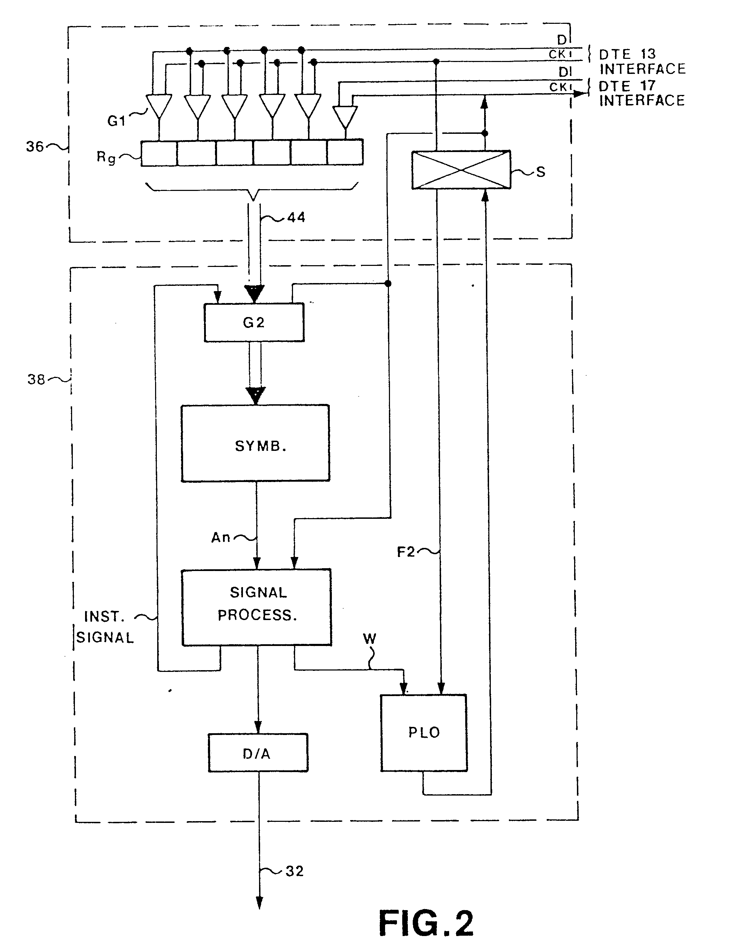

On a représenté sur la figure 2 un schéma de principe montrant des éléments d'un émetteur mis jeu pour réaliser l'invention. Cette figure permet de mieux situer l'invention au sein d'un système de transmission. On a supposé que seuls les canaux B et F, donc les terminaux 13 et 17, étaient actifs, comme indiqué plus haut. Les canaux B et F sont faits pour véhiculer des bits de données (D) et des signaux d'horloge (CK). Plus précisément, on a choisi de régler les horloges du système d'émission sur l'horloge externe à 12000 c/s appartenant au terminal 13 et de fournir au terminal un signal d'horloge à 2400 c/s réglé sur l'horloge externe à 12000 c/s. Donc toutes les 1/2400 secondes, et sous la commande de l'horloge externe (CK DTE 13), 5 bits de données du DTE 13 sont chargés dans un registre Rg à travers des portes G1. Durant ce même temps, un bit du DTE 17 est mis dans le registre Rg sous la commande du signal d'horloge à 2400 c/s dérivé du signal fourni par un oscillateur à verrouillage de phase PLO. Un commutateur «S» permet d'orienter le signal horloge CK DTE 13 vers le PLO, tandis que le signal d'horloge à 2400 c/s dérivé du signal sortant du PLO est orienté vers le terminal DTE 17. Le contenu du registre Rg constitue un «sixbit» qui est transferré au modem 38 aux instants de signalisation, à travers une porte G2 placée sur la voie de jonction 44. L'ensemble registre Rg, porte G et commutateur S appartient au multiplexeur 36. Le mot de six bits sortant du registre Rg est soumis au modem 38. Il sert tout d'abord à adresser une mémoire contenant une table de symboles SYMB, laquelle table délivre un symbole An fonction de la valeur ou composition binaire du sixbit. Ce symbole définit, dans le cas de la modulation DSB-QC, l'amplitude instantanée à donner à chaque des deux porteuses en quadrature. En pratique, le symbole An, et éventuellement des symboles précédemment extraits de la table SYMB, sont soumis à un traitement numérique dans un processeur de signal. Ce traitement engendre les échantillons numériquement codés de l'onde modulée à transmettre. Après passage dans un convertisseur numérique/analogique (D/A), l'onde analogique est transmise sur la ligne 32.

L'homme de l'art comprendra cependant que les opérations au sein du processeur de signal, régies par (micro) programmes doivent s'enchaîner entre elles dans un ordre préétabli est parfaitement ordonnancé. En d'autres termes, l'admission d'un symbole et son traitement ne peuvent s'effectuer que lorsque le processeur est disponible à cet effet. En pratique, le microprogramme régissant les opérations du processeur comporte une instruction «LECTURE DONNÉES À TRANSMETTRE». Cette instruction intervient à intervalles régulier au rythme «baud». L'exécution de cette instruction définit donc de manière précise, l'instant de signalisation. Cet instant de signalisation commande l'ouverture de la porte G2 et définit aussi, dans le cadre de l'invention, une fenêtre temporelle W dont le rôle et les caractéristiques seront précisées plus loin.

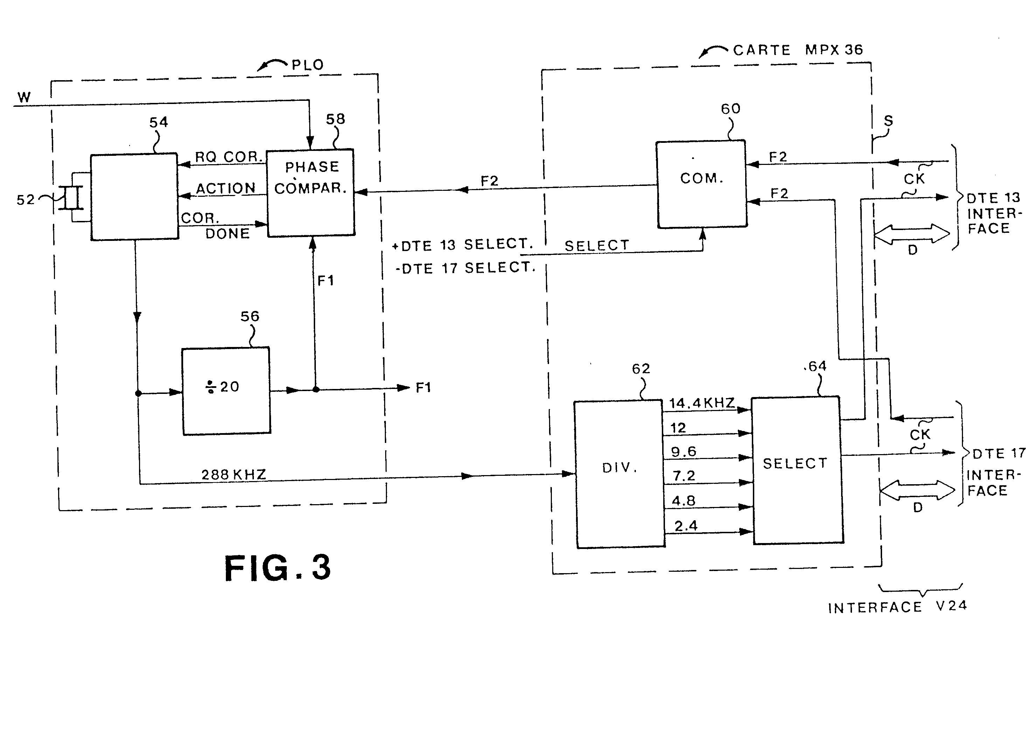

L'instant de signalisation sera celui autour duquel se fera le réglage de synchronisation des horloges. Plus précisément, en fonctionnement, comme on l'a déjà mentionné, l'horloge d'un terminal relié à un canal actif est choisie, comme horloge externe de référence. Ce choix est fixé au préalable pour chaque configuration possible du système de transmission. Cette horloge sert à ajuster l'horloge interne du modem comportant un PLO. Quant aux signaux d'horloge des autres terminaux actifs, ils sont dérivés du signal horloge fourni par le PLO du modem et imposés aux dits autres terminaux actifs. Comme on l'a indiqué plus haut le réglage du PLO de l'horloge interne s'effectue uniquement aux instants de signalisation. De même que dans le programme du processeur modem on aura défini les instants de signalisation, de même aura-t-on prévu autour de l'instruction «LECTURE DONNÉES À TRANSMETTRE» des instructions délimitant une fenêtre temporelle dont on comprendra l'utilité on considérant le fonctionnement du dispositif de la figure 3.

La figure 3 représente un schéma bloc d'un mode de réalisation du dispositif de synchronisation d'horloges de l'invention. Ce dispositif comprend en gros le PLO et les commutateurs. L'horloge à verrouillage de phase (PLO) comporte un oscillateur á quartz 52 oscillant à la fréquence de 2592 KHz. Cet oscillateur débite un signal qui passe successivement par un premier diviseur 54 puis par un second diviseur 56. Le diviseur 54 est variable, c'est-à-dire conçu pour diviser soit par 8, soit par 9, soit par 10 selon les niveaux logiques sur ses entrées recevant une information dite ACTION. Le diviseur 56 est fixe: il divise par 20 la fréquence du signal qui lui est soumis. En fonctionnement normal, le signal F1 sortant du diviseur 56 oscille à 14400 c/s et constitue donc le signal d'horloge interne du modem. Ce signal est rebouclé sur un comparateur de phase 58 qui reçoit notamment le signal F2 à 12000 c/s. Ce signal F2 est fourni par l'horloge externe sur laquelle on a choisi d'adjuster l'horloge interne. La sélection de l'horloge externe, c'est-à-dire la sélection entre l'horloge CK du DTE 13 et celle du DTE 17 est faite dans un commutateur de sélection 60 en portant sa ligne SELECT au niveau logique haut ou bas selon que l'on désire choisir l'horloge du DTE 13 ou celle du DTE 17 comme horloge externe sur laquelle le PLO doit être réglé. En outre, le comparateur de phase 58 reçoit un signal W définissant la fenêtre de temps durant laquelle les opérations de réglage de l'horloge à verrouillage de phase s'effectueront. Cette fenêtre a dans le cas présent une largeur de 1/14400 seconde et est centrée sur l'instant de signalisation défini par le microprogramme comme indiqué plus haut.

La sortie du diviseur variable 54 attaque aussi un diviseur multiple 62 lequel divise le signal soumis à l'entrée du diviseur par 20, en plusieurs signaux horloge. On retrouve là les fréquences sur lesquelles le système de communication est sensé pouvoir opérer, soit 14,4; 12; 9,6; 7,2; 4,8 et 2,4 Kc/s. Un dispositif de sélection 64 permet de choisir, en fonction de la configuration du système retenue, les sorties du diviseur 62 à utiliser. Pour l'exemple considéré, seule la ligne d'horloge CK vers le DTE 17 sera activée.

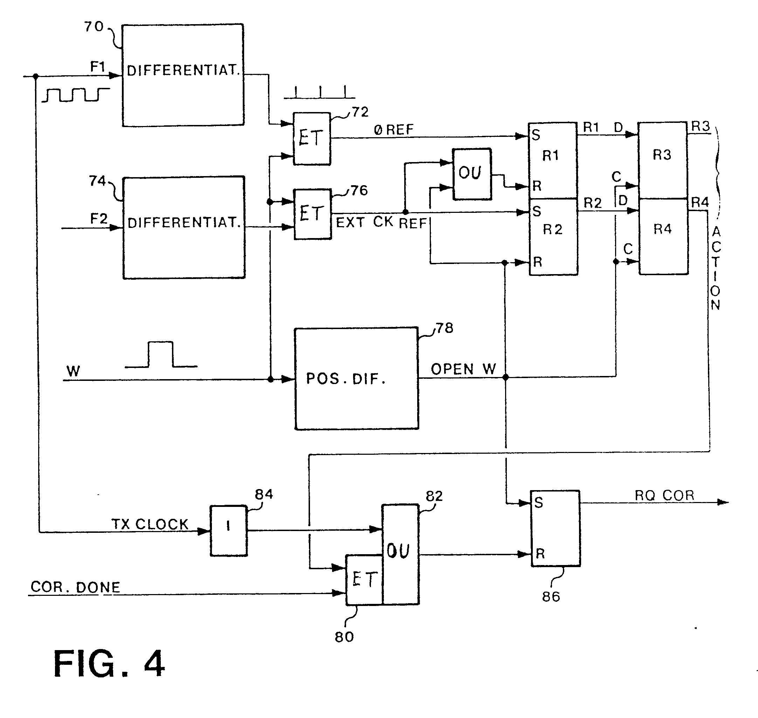

On notera en outre sur la figure 3 deux lignes respectivement désignées par RQ COR. et COR. DONE dont on verra l'utilité plus loin. La figure 4 représente un mode de réalisation du comparateur de phase 58. Le signal F1 est appliqué à l'entrée d'un circuit différentiateur 70 fournissant des impulsions étroites correspondant aux flancs descendants de F1. Ces impulsions étroites sont soumises à l'entrée d'une porte ET 72 qui n'est ouverte que lorsque le signal W, représantant une fenêtre temporelle de largeur 1/14400 seconde centrée sur l'instant de signalisation fixé par le microprocesseur du modem 38, est au niveau haut. Le signal à la sortie du circuit 72 est désigné par ∅ REF. Un second circuit différentiateur 74 agit de la même façon que le circuit 70, mais sur le signal d'horloge externe F2 oscillant à 12000 c/s. Une porte ET 76 placée à la sortie du circuit 74 est contrôlée par le signal W pour ne laisser passer que les flancs descendants du signal F2. Le signal à la sortie du circuit 76 est désigné par EXT. CK REF. Le signal W de fenêtre est aussi soumis à un circuit différentiateur (POS. DIF). 78 ne conservant que les transitions positives. Le signal sortant du circuit 78 est désigné par OPEN W. La sortie du circuit ET 72 est reliée à l'entrée (S) d'enclenchement d'une bascule R1. L'entrée (R) de restauration de cette même bascule est reliée aux sorties des circuits 76 et 78. Une autre bascule R2 a son entrée S reliée à la sortie du circuit 76 et son entrée R reliée à la sortie du circuit à travers un circuit ou logique (OR) 78. Les sorties logiques des bascules R1 et R2 sont reliées à un registre à deux positions R3 et R4. Le contenu des bascules R1 et R2 est transferré dans R3/R4 aux instants définis par le signal sortant du circuit 78. En d'autres termes on peut dire que, aux instants définis par l'apparition d'un flanc ascendant de la fenêtre W, le contenu des bascules R1 et R2 est transferré dans R3 et R4, tandis que les bascules R1 et R2 sont restaurées. Le contenu du registre R3/R4 servira à régler le diviseur variable, donc le PLO après qu'une demande de correction aura été exprimée (RQ COR.). On verra plus loin le détail de ces opérations. Après qu'une correction du PLO a été effectuée, le diviseur variable 54 engendre une impulsion dite «COR. DONE». Cette impulsion est envoyée à l'entrée d'une porte ET logique 80 dont la seconde entrée est reliée à la sortie de R4. La sortie de la porte 80 est reliée à l'entrée d'un circuit OU logique 82 dont la seconde entrée reçoit le signal F1 inversé en 84. La sortie du circuit OU 82 est reliée à l'entrée R de restauration d'une bascule 86 dont l'entrée d'enclenchement est reliée à la sortie du circuit 78. La sortie normale de la bascule 86 fournit l'information de demande de correction RQ COR signalée plus haut.

Le contenu du registre R3/R4 sera à considérer dans son ensemble comme un groupe de deux bits ayant la signification suivante:

| R3 | R4 | |
|----|----|---|
| X | 0 | Pas de transition négative de F2 à l'intérieur de la fenêtre W |
| 0 | 1 | Transition négative de F2 après centre fenêtre (ou transition négative de F1) |
| 1 | 1 | Transition négative de F2 avant centre fenêtre |

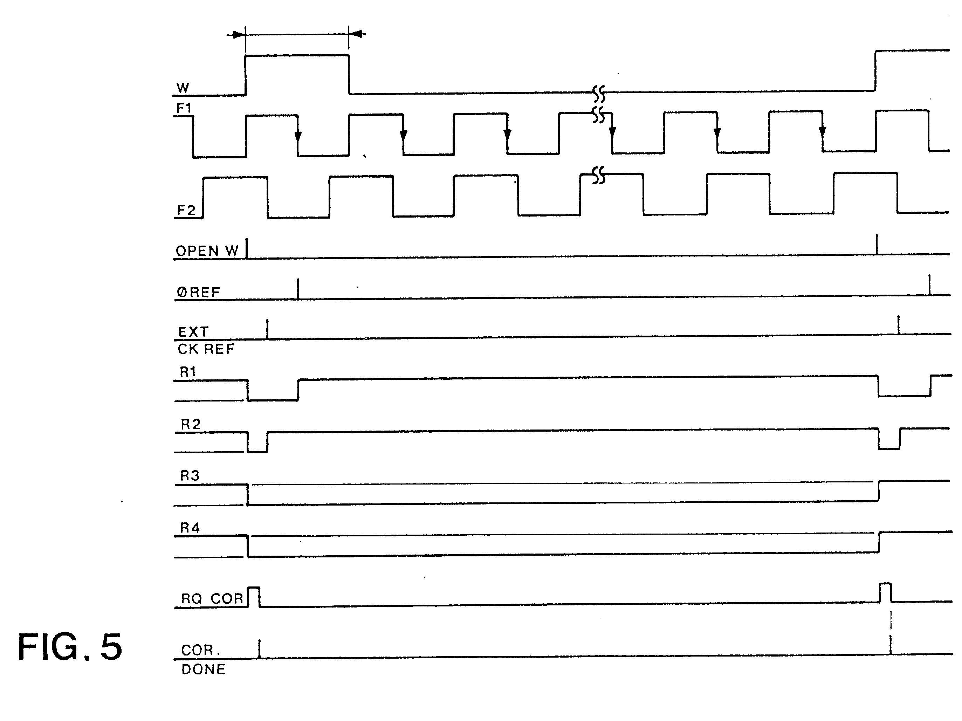

La figure 5 représente un diagramme temporel du fonctionnement du comparateur de phase 58. La première ligne représente la fenêtre W qui a ici une largeur de 1/14400 seconde et apparaît une fois par temps baud, c'est-à-dire toutes les 1/2400 s. Les seconde et troisième lignes représentent respectivement les signaux F1 à 14400 c/s et F2 à 12000 c/s. Sur la ligne suivante on a représenté l'impulsion OPEN W traduisant l'instant d'ouverture de la fenêtre W. Les deux lignes suivantes représentent respectivement les signaux ∅ REF et EXT. CK REF traduisant les instants d'apparition de flancs descendants de F1 et F2 à l'intérieur d'une fenêtre W. Les quatre lignes suivantes représentent les signaux sur les sorties de R1, R2, R3 et R4. L'avant dernière ligne représente l'instant de demande de correction RQ COR fourni par la bascule 86. Quant à la dernière ligne elle représente la réponse COR. DONE indiquant au comparateur de phase 58 que la correction a été effectuée.

En fonctionnement, l'action du comparateur de phase sur le diviseur variable dépend du mot binaire R3, R4 lequel fournit donc l'ordre ACTION mentionné plus haut. Si le mot ACTION est égal à 00 ou 10, un réglage ou asservissement rapide (accélération) du PLO est effectué. Autrement dit, le diviseur variable est fixé sur 8 (= division par 8) durant un demi temps bit, autrement dit durant 1/28800 seconde. Le diviseur variable passe ensuite sur 9 et y reste jusqu'à la prochaine fenêtre où le contenu de R3, R4 est examiné à nouveau. L'action dite d'accélération a pour bout but de ramener les transitions de l'horloge interne F1 à l'intérieur de la fenêtre. Par contre, si le mot ACTION est égal à 01 ou 11, le circuit PLO est soumis à un réglage ou asservissement dit lent. Plus précisément le fonctionnement est alors celui d'un PLO classique et ce uniquement aux instants de signalisation et à l'intérieur de la fenêtre temporelle W de largeur prédéterminée. Si le mot binaire R3, R4 est égal à 01 le diviseur variable est fixé sur 10 (en valeur décimale) tandis que si le mot binaire R3, R4 est égal à 11 le diviseur variable est fixé sur 8. Dans ces deux derniers cas (R3, R4 égal à 01 ou 11) l'action sur le diviseur variable ne dure qu'une seule étape. Autrement dit la division par 8 ou 10 ne se fait qu'une fois puis le système passe sur une division par 9 jusqu'au prochain instant de signalisation.

## Revendications

1. Procédé de synchronisation permettant d'adapter les communications de données entre une pluralité de terminaux de données basses vitesses (DTE 13, 17) et un même canal (32) de transmission haute vitesse, caractérisé en ce qu'il s'applique à un réseau dans lequel les terminaux dits basses vitesses possèdent des horloges dites externes (CK) et sont reliés au canal haute vitesse à travers un modem (38) possédant une horloge interne du genre à verrouillage de phase (PLO), lesdits terminaux étant reliés au modem à travers des canaux rendus sélectivement actifs selon des configurations prédéterminées et ledit modem transmettant un groupe de bits à chaque instant dit de signalisation, ledit procédé comportant les opérations suivantes:

– sélection d'une fenêtre temporelle (W) de largeur prédéterminée à placer autour des instants de signalisation;

– sélection de l'une des horloges externes comme horloge sur laquelle le PLO du modem est destiné à être réglé;

– recherche d'une transition du signal délivré par l'horloge externe sélectionnée, à l'intérieur de chaque fenêtre temporelle et réglage du PLO en fonction du résultat de ladite recherche de transition, ledit réglage comprenant:

· soit un asservissement rapide par accélération du PLO durant un intervalle de temps donné, lorsque ladite transition n'apparaît pas à l'intérieur de la fenêtre considérée;

· soit un asservissement lent du PLO lorsqu'une transition est présente, ledit asservissement n'étant effectué qu'à l'intérieur de la fenêtre considérée.

2. Procédé de synchronisation d'horloges selon la revendication 1, caractérisé en outre en ce que ladite fenêtre temporelle a une largeur égale à la période de ladite horloge interne.

3. Procédé de sychronisation d'horloges selon la revendication 1 ou 2 caractérisé en outre en ce que ladite sélection d'horloge externe est déterminée au préalable pour chacune des configurations de canaux actifs admises par le système de transmission de données.

4. Procédé de synchronisation d'horloges selon la revendication 3 caractérisé en outre en ce que ledit intervalle de temps durant lequel l'asservissement rapide du PLO, par accélération est effectué à l'intérieur d'une fenêtre temporelle donnée, est égal à ½ période d'horloge interne.

5. Procédé de synchronisation d'horloges selon la revendication 3 caractérisé en outre en ce que ledit modem utilise le procédé de modulation de type dit DSB-QC pour transmettre à chaque instant de signalisation un symbole choisi en fonction de la valeur binaire d'un groupe de bits prédéterminé fournis par lesdits canaux actifs, ledit symbole déterminant les valeurs des modulations d'amplitudes de deux porteuses en quadrature.

6. Dispositif de synchronisation d'horloges permettant d'adapter les communications de données entre des terminaux basses vitesses (DTE) et un canal haute vitesse (32) caractérisé en ce qu'il est destiné à un système de transmission de données du genre dans lequel les bits de données en provenance des terminaux actifs possédant chacun une horloge dite externe (CK) sont groupés selon un ordre prédéterminé (Rg) pour être transmis à des instants de signalisation par modulation de type DSB-QC sous le contrôle d'une horloge interne, ledit dispositif comportant:

– des moyens de sélection (64) reliés aux dites (CK) horloges externes pour sélectionner l'une d'entre elles sur laquelle l'horloge interne devra être réglée;

– un oscillateur à verrouillage de phase (PLO) comprenant notamment:

· un oscillateur à quartz (52);

· un comparateur de phases (58) relié aux moyens de sélection;

· un diviseur variable (54) relié au comparateur de phases et à l'oscillateur à quartz;

· un diviseur fixe (56) relié au diviseur variable et fournissant le signal d'horloge interne à synchroniser sur le signal d'horloge externe sélectionné; et,

– des moyens de commande reliés au comparateur de phase et fournissant un signal logique représentant une fenêtre temporelle (W) centrée sur les instants de signalisation et à l'intérieur de laquelle les opérations de réglage du PLO s'effectueront.

7. Dispositif de synchronisation d'horloges selon la revendication 6, caractérisé en ce que l'instant de signalisation servant à localiser la fenêtre temporelle, est défini par le microporgramme régissant les opérations d'un processeur appartenant au modulateur de type DSB-QC.

8. Dispositif de synchronisation d'horloges selon l'une des revendications 6 ou 7 et caractérisé en outre en ce que ledit comparateur de phase comporte:

– des moyens de détection, de transition reliés au diviseur fixe et destinés à vérifier la présence à l'intérieur d'une fenêtre temporelle une transition de sens donné du signal d'horloge interne fourni par le PLO;

– des moyens de mesure de phase reliés aux moyens de sélection d'horloge externe et mesurant le sens du déphasage entre les transitions des signaux d'horloge externe et horloge interne apparaissant éventuellement à l'intérieur d'une fenêtre temporelle;

– des moyens d'asservissement rapide reliés aux moyens de détection de transition et au diviseur variable pour fournir une commande destinées à accélérer le PLO en diminuant son coefficient de division durant un intervalle de temps donné en réponse à une commande indiquant l'absence de transition à l'intérieur d'une fenêtre temporelle; et,

– des moyens d'asservissement lent reliés aux dits moyens de détection de transition et aux moyens de mesure de phase pour assurer pendant la durée de la fenêtre le réglage du PLO en fonction du signe de déphasage en réponse à une commande indiquant la présence d'une transition à l'intérieur de la fenêtre.

**Patentansprüche**

1. Synchronisierungsverfahren, das es erlaubt, Datenübertragungen zwischen einer Vielzahl von Datenendstationen mit geringer Geschwindigkeit (DTE 13, 17) und einem einzigen Übertragungskanal (32) mit hoher Geschwindigkeit anzupassen, dadurch gekennzeichnet, dass es für ein Netz ausgelegt ist, in dem die Datenendstationen mit sogenannter niedriger Geschwindigkeit sogenannte fremde Taktgeber (CK) benutzen und über ein Modem (38), das einen inneren Taktgeber vom Phasenverriegelungstyp (PLO) besitzt, mit dem Hochgeschwindigkeitskanal verbunden sind, während die genannten Datenendstationen über Kanäle, die je nach vorbestimmten Konfigurationen gezielt aktiv gemacht werden, mit dem Modem verbunden sind und das genannte Modem zu jedem Signalgebung genannten Zeitpunkt eine Bitgruppe überträgt, wobei folgende Schritte zum genannten Verfahren gehören:

– Wahl eines zeitlichen Fensters (W) vorbestimmter Breite, das beiderseits der Signalgebung anzuordnen ist;

– Wahl eines der fremden Taktgeber als Taktgeber, nach dem das PLO des Modems einzuregeln ist;

– Suche nach einem Übergang für das vom gewählten fremden Taktgeber erstellten Signal im Innern des zeitlichen Fensters und Einstellung des PLO im Verhältnis zum Ergebnis dieser Übergangssuche, wobei folgende Operationen zur genannten Einstellung gehören:

· entweder eine schnelle Regelung durch Beschleunigung des PLO während eines gegebenen Zeitabstandes, wenn der genannte Übergang nicht im Rahmen des gewählten Fensters erscheint,

· oder eine langsame Regelung des PLO, wenn ein Übergang vorliegt, wobei die genannte Regelung nur im Rahmen des gewählten Fensters durchgeführt wird.

2. Synchronisierungsverfahren für Taktgeber nach Anspruch 1, weiterhin dadurch gekennzeichnet, dass das genannte zeitliche Fenster eine Breite aufweist, die der Periode des genannten inneren Taktgebers gleich ist.

3. Synchronisierungsverfahren für Taktgeber nach Anspruch 1 oder 2, weiterhin dadurch gekennzeichnet, dass die genannte Wahl des fremden Taktgebers vorhergehend für jede der Konfigurationen bestimmt wird, die vom Datenübertragungssystem für die aktiven Kanäle zugelassen sind.

4. Synchronisierungsverfahren für Taktgeber nach Anspruch 3, weiterhin dadurch gekennzeichnet, dass der genannte Zeitabstand, während dem die schnelle Regelung des PLO durch Beschleunigung und innerhalb eines gegebenen zeitlichen Fensters erfolgt, der halben Periode des internen Taktgebers entspricht.

5. Synchronisierungsverfahren für Taktgeber nach Anspruch 3, weiterhin dadurch gekennzeichnet, dass das genannte Modem das Modulationsverfahren vom Typ DSB-QC benutzt, um zum Zeitpunkt jeder Signalgebung ein Symbol zu übertragen, das im Hinblick auf den binären Wert einer vorbestimmten und von den genannten aktiven Kanälen erstellten Bitgruppen gewählt wurde, wobei das genannte Symbol die Amplituden-Modulationswerte von zwei um 90° phasenverschobenen Trägerwellen bestimmt.

6. Synchronisierungsverfahren für Taktgeber, das es ermöglicht, den Datenaustausch zwischen Datenendstationen mit geringen Geschwindigkeiten (DTE) und einem Kanal mit hoher Geschwindigkeit (32) anzupassen, dadurch gekennzeichnet, dass es für ein Datenübertragungssystem von dem Typ bestimmt ist, in dem die von den aktiven Datenendstationen kommenden Datenbits jeweils mit einem sogenannten fremden Taktgeber (CK) ausgerüstet und in einer vorbestimmten Reihenfolge (Rg) angeordnet sind, um bei Signalgebung durch Modulation vom Typ DSB-QC unter Steuerung eines innneren Taktgebers übermittelt zu werden, wobei diese Vorrichtung folgende Elemente aufweist:

– Wahlmittel (64), mit den genannten fremden Taktgebern (CK) verbunden, um einen davon auszuwählen, nach dem der innere Taktgeber geregelt werden muss;

– ein Oszillator mit Phasenverriegelung (PLO), zu dem gehören:

· ein Quarzoszillator (52),

· ein mit den Auswahlmitteln verbundener Phasenkomparator (58),

· ein fester Teiler (56), der mit dem variablen Teiler verbunden ist und das innere Taktgebersignal erstellt, das mit dem Signal des gewählten fremden Taktgebers zu synchronisieren ist, und

· mit dem Phasenkomparator verbundene Steuermittel, die ein logisches Signal liefern, das ein zeitliches, auf die Signalgebungszeiten zentriertes Fenster (W) darstellt, in dessen Rahmen die Regelungsschritte des PLO ablaufen.

7. Synchronisierungsverfahren für Taktgeber nach Anspruch 6, dadurch gekennzeichnet, dass der zum Lokalisieren des zeitlichen Fensters dienende Zeitpunkt der Signalgebung durch das Mikroprogramm definiert wird, das die Funktionen eines Prozessors steuert, der zum Modulator vom Typ DSB-QC gehört.

8. Synchronisierungsverfahren für Taktgeber nach Anspruch 6 oder 7, weiterhin dadurch gekennzeichnet, dass der genannte Phasenkomparator aufweist:

– Übergangs-Detektionsmittel, mit dem festen Teiler verbunden und dazu bestimmt, festzustellen, ob im Rahmen eines zeitlichen Fensters ein Übergang in der Richtung vor sich geht, die dem vom PLO erstellten inneren Taktgebersignal entspricht;

– Phasenmessmittel, mit den Auswahlmitteln des fremden Taktgebers verbunden und dazu bestimmt, die Richtung der Phasenverschiebung zwischen den Übergängen der fremden und der inneren Taktgebersignale zu messen, die eventuell im Innern eines zeitlichen Fensters erscheinen;

– schnelle Regelungsmittel, mit den Übergangs-Detektionsmitteln und dem variablen Teiler verbunden, um einen Steuerbefehl zu erstellen, der durch Verringerung des Teilungskoeffizienten während eines gegebenen Zeitabstandes eine Beschleunigung des PLO bewirken soll, und zwar als Antwort auf einen Befehl, aus dem hervorgeht, dass im Innern eines zeitlichen Fensters kein Übergang erfolgt; und

— langsame Regelungsmittel, mit den Übergangs-Detektionsmitteln und den Phasenmessmitteln verbunden, um während des Bestehens des Fensters die Einstellung des PLO als Funktion des Phasenverschiebungssignals zu gewährleisten als Antwort auf einen Befehl, aus dem hervorgeht, dass im Innern des zeitlichen Fensters ein Übergang stattfindet.

**Claims**

1. A synchronization method für adapting data transmissions between a plurality of low-speed data terminals (DTEs 13, 18) and one high-speed transmission channel (32), characterized in that it applies to a network wherein said low-speed terminals include external clocks (CKs) and are connected to said high-speed channel through a modem (38) provided with an internal clock of the type comprising a phase-locked oscillator (PLO), said terminals being connected to the modem through channels that are selectively activated according to predetermined configurations and said modem transmitting a group of bits at each signaling instant, said method including the steps of:

— selecting a time slot (W) of predetermined width to be centered on the signaling instants,

— selecting one of said external clocks as a reference for adjusting the PLO of the modem,

— determining whether a transition of the signal supplied by the selected external clock occurs within each time slot and adjusting the PLO accordingly, with the adjustment being either:

· a fast adjustment made by increasing the output frequency of the PLO during a given time interval if said transition fails to occur within said time slot, or

· a slow adjustment if said transition does occur, said slow adjustment being made solely within said time slot.

2. A method of synchronizing clocks according to claim 1, further characterized in that the width of said time slot is equal to the period of said internal clock.

3. A method of synchronizing clocks accoring to claim 1 or 2, further characterized in that said external clock selection is predetermined for every configuration of active channels allowed by the data transmission system.

4. A method of synchronizing clocks according to claim 3, further characterized in that said time interval during which said fast PLO adjustment is made by increasing the output frequency thereof within a given time slot, is equal to half the internal clock period.

5. A method of synchronizing clocks according to claim 3, further characterized in that said modem uses a modulation technique of the type termed DSB-QC for transmitting at each signaling instant a symbol selected in accordance with the binary value of a predetermined group of bits supplied by said active channels, said symbol determining the values of the amplitude modulations of two quadrature carriers.

6. A clock synchronizing device for adapting data transmissions between low-speed terminals (DTEs) and a high-speed channel (32), characterized in that it is intended for a data transmission system of the type wherein data bits from active terminals provided each with an external clock (CK) are grouped in a predetermined order (Rg) to be transmitted at signaling instants using a DSB-QC modulation technique under the control of an internal clock, said device including:

— selection means (64) connected to said external clocks (CKs) for selecting one of them to be used as a reference for adjusting the internal clock,

— a PLO including:

· a crystal oscillator (52),

· a phase comparator (58) connected to the selection means,

· a variable divider (54) connected to said phase comparator and crystal oscillator,

· a fixed divider (56) connected to said variable divider and supplying the internal clock signal to be synchronized with the selected external clock signal, and

— control means connected to said phase comparator and supplying a logic signal representing a time slot (W) centered on the signaling instants and within which adjustment of the PLO is to be performed.

7. A clock synchronizing device according to claim 6, characterized in that the signaling instant on which the time slot is centered is defined by the microprogram that control the operations of a processor belonging to the DSB-QC modulator.

8. A clock synchronizing device according to claim 6 or 7, further characterized in that said phase comparator includes:

— transition detecting means connected to the fixed divider for determining the occurrence within a time slot of a given up-going or down-going transition of the internal clock signal supplied by the PLO,

— phase determining means connected to said external clock selection means for determining the sign of the phase difference between internal and external clock signal transitions that may occur within a time slot,

— fast adjustment means connected to said transition detecting means and said variable divider for supplying a command serving to increase the output frequency of the PLO by decreasing the value of the division factor thereof during a given time interval in response to a command indicating that no transition occured within a time slot, and

— slow adjustment means connected to said transition detecting means and said phase determining means for adjusting the PLO during the time slot according to the sign of the phase difference in response to a command indicating the occurrence of a transition within the time slot.

FIG.1

FIG.2

FIG. 3

FIG. 4

FIG. 5